# EUROPÄISCHE PATENTANMELDUNG

(11) **EP 4 825 514 A1**
(43) Veröffentlichungstag der Anmeldung: **21.10.2026**
(21) Anmeldenummer: 26165565.8
(22) Anmeldetag: 17.03.2026
(51) Int. Cl.: B23F 23/12, B23F 5/04, B24B 53/075

(54) **VERFAHREN ZUM SCHLEIFEN EINES ZAHNRADS ODER EINES ZAHNRADFÖRMIGEN PROFILS MITTELS EINER SCHLEIFSCHNECKE, UND ABRICHTWERKZEUG**

(30) Priorität: 28.03.2025 DE 102025112301
(71) Anmelder: Kapp Niles GmbH & Co. KG, 96450 Coburg (DE); Volkswagen Aktiengesellschaft, 38440 Wolfsburg (DE)
(72) Erfinder: NIEMANN, Kerstin, 96476 Bad Rodach (DE); FÖHRKOLB, Andreas, 96489 Niederfüllbach (DE); PULST, Ludwig, 13187 Berlin (DE); GANSERT, Frank, 96450 Coburg (DE); KINDSVATER, Maxim, 38440 Wolfsburg (DE); RADEV, Todor, 38440 Wolfsburg (DE); HAMMERSCHLAG, Stefan, 38440 Wolfsburg (DE); LÜHRS, Georg-Friedrich, 38440 Wolfsburg (DE)
(74) Vertreter: Gosdin, Carstensen & Partner Patentanwälte Partnerschaftgesellschaft mbB

(57) **Zusammenfassung**

Die Erfindung betrifft ein Verfahren zum Schleifen eines Zahnrads oder eines zahnradförmigen Profils mittels einer mehrgängigen Schleifschnecke, bei dem die Schleifschnecke vor dem Schleifen einem Abrichtvorgang unterzogen wird, wobei beim Abrichten der Schleifschnecke ein Abrichtwerkzeug (1) mit der Schleifschnecke in Eingriff gebracht wird und wobei das Abrichtwerkzeug (1) als mehrrillige Abrichtrolle ausgebildet ist, welche mehrere um die Achse (a) der Abrichtrolle herum verlaufende Abrichtflächen (2, 3, 4) aufweist, welche im Radialschnitt zahnförmig ausgebildet sind. Um ein solches Verfahren dazu tauglich zu machen, in wirtschaftlicher Weise und mit hoher Präzision Zahnräder herzustellen, die mit einer inäquidistanten Verzahnung versehen sind, sieht die Erfindung vor, dass mindestens drei der Abrichtflächen (2, 3, 4) entlang der Achse (a) der Abrichtrolle ungleichmäßig voneinander beabstandet sind und/oder dass sich mindestens zwei der Abrichtflächen (2, 3, 4) im Radialschnitt in ihrer Form voneinander unterscheiden. Des Weiteren betrifft die Erfindung ein Abrichtwerkzeug.

## Beschreibung

Die Erfindung betrifft ein Verfahren zum Schleifen eines Zahnrads oder eines zahnradförmigen Profils mittels einer mehrgängigen Schleifschnecke, bei dem die Schleifschnecke vor dem Schleifen einem Abrichtvorgang unterzogen wird, wobei beim Abrichten der Schleifschnecke ein Abrichtwerkzeug mit der Schleifschnecke in Eingriff gebracht wird und wobei das Abrichtwerkzeug als mehrrillige Abrichtrolle ausgebildet ist, welche mehrere um die Achse der Abrichtrolle herum verlaufende Abrichtflächen aufweist, welche im Radialschnitt zahnförmig ausgebildet sind. Des Weiteren betrifft die Erfindung ein Abrichtwerkzeug.

Mit diesem vorbekannten Verfahren können Zahnräder schnell und damit wirtschaftlich sowie präzise gefertigt werden.

Das Schleifen mit einer Schleifschnecke ist als solches im Stand der Technik hinlänglich bekannt, wozu beispielsweise auf die DE 10 2019 004 687 A1**,** auf die DE 10 2004 020 947 A1 und auf die DE 10 2016 010 893 A1 Bezug genommen wird.

Im Betrieb des Zahnrades entstehen zwangsläufig Geräusche, die durch eine hochwertige Hartfeinbearbeitung zwar minimiert werden können, aber sich nie ganz vermeiden lassen. Dabei werden regelmäßige Geräusche (Geräusche mit tonalem Charakter) zumeist als unangenehmer empfunden als Geräusche mit rauschartigem Charakter. Um bei der Geräuschentwicklung einer sich im Betrieb befindlichen Verzahnung die Regelmäßigkeit bei der Geräuschentstehung zu reduzieren, kommt der Einsatz von Zahnrädern mit sogenannter inäquidistanter Verzahnung in Betracht. Zum diesbezüglichen Stand der Technik wird auf die DE 35 33 743 A1 Bezug genommen.

Wegen der nicht gegebenen Äquidistanz der Abstände von Zahn zu Zahn ist die Fertigung einer solchen Verzahnung problematischer, als wenn eine klassische äquidistante Verzahnung vorliegt. Als Hartfeinbearbeitungsverfahren bei der Produktion inäquidistanter Verzahnungen dürfte sich das Profilschleifverfahren anbieten, bei dem Zahnlücke für Zahnlücke geschliffen wird, und zwar für jede Flanke separat, um gewünschte Inäquidistanzen zu erzeugen.

Nachteilig ist hierbei jedoch, dass dieses Verfahren entsprechend zeitintensiv ist und die herzustellenden Zahnräder demgemäß teuer sind.

Der Erfindung liegt die **Aufgabe** zugrunde, ein Verfahren der eingangs genannten Art so fortzubilden, dass es in wirtschaftlicher Weise und mit hoher Präzision möglich ist, Zahnräder bzw. Werkstücke mit einem zahnradähnlichen Profil herzustellen, die mit einer inäquidistanten Verzahnung bzw. Profilierung versehen sind. Des Weiteren soll ein entsprechendes Abrichtwerkzeug bereitgestellt werden.

Die **Lösung** dieser Aufgabe durch die Erfindung ist verfahrensgemäß dadurch gekennzeichnet, dass beim Schleifen eines Zahnrads oder eines zahnradförmigen Profils mit einer inäquidistanten Verzahnung oder Profilierung mittels einer mehrgängigen Schleifschnecke mindestens drei der Abrichtflächen entlang der Achse der Abrichtrolle ungleichmäßig voneinander beabstandet sind und/oder dass sich mindestens zwei der Abrichtflächen im Radialschnitt in ihrer Form voneinander unterscheiden.

Bevorzugt sind dabei mehrere der Abrichtflächen, vorzugsweise alle Abrichtflächen, beim Abrichten zumindest zeitweilig mit der Schleifschnecke simultan in Eingriff.

Nach einer bevorzugten Ausführungsform der Erfindung ist dabei vorgesehen, dass die zahnförmigen Abrichtflächen an einem Bezugsdurchmesser eine Zahndicke aufweisen, wobei mindestens zwei der Zahndicken unterschiedlich groß sind.

Zusätzlich oder alternativ kann vorgesehen sein, dass die zahnförmigen Abrichtflächen an einem Bezugsdurchmesser eine Teilung aufweisen, wobei mindestens zwei der Teilungen unterschiedlich groß sind.

Eine weitere zusätzliche oder alternative Ausgestaltung sieht vor, dass die zahnförmigen Abrichtflächen eine maximale radiale Höhe aufweisen, wobei mindestens zwei der Höhen unterschiedlich groß sind.

Eine weitere Möglichkeit besteht darin, dass die zahnförmigen Abrichtflächen einen Flankenwinkel aufweisen, wobei mindestens zwei der Flankenwinkel unterschiedlich groß sind.

Bevorzugt sind alle Zahndicken, alle Teilungen, alle Höhen bzw. alle Flankenwinkel unterschiedlich groß.

Die Differenz zwischen der oben genannten größten und kleinsten Zahndicke beträgt bevorzugt mindestens 0,05 mm, besonders bevorzugt mindestens 0,1 mm und insbesondere mindestens 0,2 mm, beträgt. Entsprechend gilt auch für die Teilung, dass die Differenz zwischen größter und kleinster Teilung bevorzugt mindestens 0,05 mm, besonders bevorzugt vorzugsweise mindestens 0,1 mm und insbesondere mindestens 0,2 mm, beträgt.

Das Verhältnis der Anzahl der Zähne des Zahnrads oder des zahnradförmigen Profils und die Anzahl der Gänge der abzurichtenden Schleifschnecke ist dabei bevorzugt ganzzahlig.

Das vorgeschlagene Abrichtwerkzeug für das Abrichten einer mehrgängigen Schleifschnecke zum Schleifen einer Verzahnung oder eines zahnradförmigen Profils mit einer inäquidistanten Verzahnung oder Profilierung, welches als mehrrillige Abrichtrolle ausgebildet ist, die mehrere um die Achse der Abrichtrolle herum verlaufende Abrichtflächen aufweist, welche im Radialschnitt zahnförmig ausgebildet sind, zeichnet sich erfindungsgemäß dadurch aus, dass mindestens drei der Abrichtflächen, vorzugsweise alle Abrichtflächen, entlang der Achse der Abrichtrolle ungleichmäßig voneinander beabstandet sind und/oder dass sich mindestens zwei der Abrichtflächen, vorzugsweise alle Abrichtflächen, im Radialschnitt in ihrer Form voneinander unterscheiden.

Ansonsten gelten auch hier die oben genannten Spezifikationen bezüglich der geometrischen Parameter, durch die sich die einzelnen Abrichtflächen voneinander unterscheiden, sowie auch die genannten Größenverhältnisse.

Die Abrichtflächen weisen bevorzugt einen Diamantbelag auf.

Mit der vorgeschlagenen Vorgehensweise bzw. Ausgestaltung der Abrichtrolle wird es möglich, schnell und präzise Zahnräder hartfeinzubearbeiten, die eine inäquidistante Verzahnung aufweisen.

Kerngedanke der Erfindung ist dabei, dass die einzelnen Abrichtflächen der Abrichtrolle nicht alle gleich ausgebildet sind, sondern sich insbesondere in den Positionen entlang der Richtung der Achse der Abrichtrolle, bezüglich der Zahndicken, bezüglich der Zahnkopfhöhen, bezüglich der Zahnlückengrundtiefen, bezüglich der Eingriffswinkel, bezüglich der Verzahnungsmoduln und/oder bezüglich der Zahnbreiten voneinander unterscheiden.

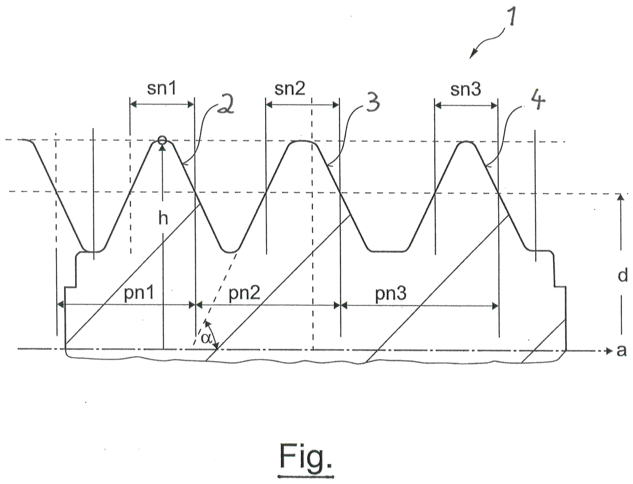

In der Zeichnung ist ein Ausführungsbeispiel der Erfindung dargestellt. Die einzige Figur zeigt den Radialschnitt (bzw. Normalschnitt, d. h. die Achse der Abrichtrolle liegt in der Zeichenebene) durch eine mehrrillige Abrichtrolle, welche zum Abrichten einer mehrgängigen Schleifschnecke vorgesehen ist.

In der Figur ist ein Abrichtwerkzeug 1 in Form einer mehrrilligen Abrichtrolle dargestellt (bzw. deren obere Hälfte), welche mehrere Abrichtflächen 2, 3, 4 aufweist, die parallel zueinander zirkulär um die Achse a der Abrichtrolle 1 herum verlaufen. Die Abrichtflächen 2, 3, 4 sind mit Diamant versehen und somit in der Lage, beim Eingreifen in eine abzurichtende Schleifschnecke die einzelnen Gänge der Schleifschnecke mit dem Profil zu versehen, welches durch die Abrichtflächen 2, 3, 4 der Abrichtrolle 1 vorgegeben ist.

Nicht weiter erläutert ist, dass im Weiteren dann mit der entsprechend abgerichteten Schleifschnecke eine Verzahnung im Wälzschleifverfahren hartfeinbearbeitet wird, was im Stand der Technik hinlänglich bekannt ist.

Wesentlich ist, dass die drei Abrichtflächen 2, 3 und 4 geometrisch nicht alle gleich ausgebildet sind bzw. entlang der Achse a der Abrichtrolle 1 mit unterschiedlichen bzw. sich verändernden Teilungen angeordnet sind.

Wenn man einen Bezugsdurchmesser d betrachtet (der vorliegend etwa mittig zwischen dem Kopfkreis und dem Fußkreis der dargestellten zahnförmigen Gestaltung liegt), ergeben sich für die Zahndicken jeweilige Werte sn1, sn2 bzw. sn3. Wesentlich ist, dass gemäß einer bevorzugten Ausgestaltung der Erfindung für die Zahndicken jeweils unterschiedliche Werte vorliegen, d. h. im Unterschied zu vorbekannten Lösungen sind die Zahndicken nicht alle gleich.

Korrespondierend hierzu sind im Ausführungsbeispiel auch die Teilungen (d. h. die Abstände von Zahn zu Zahn) pn1, pn2 und pn3 unterschiedlich und im Unterschied zu vorbekannten Lösungen nicht alle gleich.

Eingetragen ist auch noch für eine der Abrichtflächen (nämlich für die Abrichtfläche 2) die radiale Höhe h. Im Ausführungsbeispiel sind zwar die radialen Höhen h aller Abrichtflächen 2, 3, 4 gleich groß; allerdings besteht auch insoweit die Möglichkeit, die Höhen unterschiedlich zu gestalten.

Das Gleiche gilt für den Flankenwinkel α der Flanken der Abrichtflächen 2, 3, 4; dieser ist für die Abrichtfläche 3 eingetragen. Auch hier gilt, dass im Ausführungsbeispiel besagte Winkel alle gleich groß sind. Auch diesbezüglich kann allerdings vorgesehen werden, dass unterschiedliche Winkel für die einzelnen Abrichtflächen 2, 3, 4 vorgesehen werden.

Wird mit einer solchen Abrichtrolle eine mehrgängige Schleifschnecke abgerichtet, wird diese so profiliert, dass sich beim späteren Schleifen einer Verzahnung mit der Schleifschnecke analog eine inäquidistante Verzahnung ergibt, d. h. die Zahndicken bzw. Teilungen bzw. andere geometrische Größen sind nicht alle gleich, sondern unterschiedlich.

Zu den oben genannten Größenordnungen der Differenzen zwischen größter und kleinster Zahndicke bzw. zwischen größter und kleinster Teilung sei angemerkt, dass diese dazu führen, dass beim Schleifen einer Verzahnung mit der Schleifschnecke, die mit der Abrichtrolle 1 abgerichtet ist, ein Versatz in der Teilung der Zähne des Zahnrades erreicht wird, der in der Größenordnung von etwa 0,5° liegt. Hieraus ergibt sich dann die Charakteristik der inäquidistanten Verzahnung.

Das Vorprofilieren der Schleifschnecke (aus einem zylindrischen Grundkörper), d. h. das initiale Einbringen der einzelnen Schneckengänge der Schleifschnecke kann auf einer Profiliermaschine (beispielsweise der Burri Werkzeugmaschinen GmbH und Co. KG) erfolgen. Dabei können mit einer Diamantscheibe die einzelnen Schneckengänge zweiflankig eingearbeitet werden. Ferner kann dabei jeder einzelne Gang der Schleifschnecke mit einer individuellen Profiltiefe und/oder mit einer individuellen rotatorischen und/oder tangentialen Position und/oder mit einem individuellen Flankenwinkel (jeweils mit einer konstanten Steigung) eingearbeitet werden. Das beschriebene Verfahren schließt sich dann an, um die genaue Profilierung der einzelnen Gänge der Schleifschnecke herzustellen.

### Bezugszeichenliste:

- 1: Abrichtwerkzeug (mehrrillige Abrichtrolle)
- 2: Abrichtfläche
- 3: Abrichtfläche
- 4: Abrichtfläche

- a: Achse des Abrichtwerkzeugs
- d: Bezugsdurchmesser für die Zahndicke

- sn1: Zahndicke
- sn2: Zahndicke
- sn3: Zahndicke

- pn1: Teilung
- pn2: Teilung
- pn3: Teilung

- h: radiale Höhe

- α: Flankenwinkel

## Patentansprüche

1. Verfahren zum Schleifen eines Zahnrads oder eines zahnradförmigen Profils mit einer inäquidistanten Verzahnung oder Profilierung mittels einer mehrgängigen Schleifschnecke, bei dem die Schleifschnecke vor dem Schleifen einem Abrichtvorgang unterzogen wird, wobei beim Abrichten der Schleifschnecke ein Abrichtwerkzeug (1) mit der Schleifschnecke in Eingriff gebracht wird, wobei das Abrichtwerkzeug (1) als mehrrillige Abrichtrolle ausgebildet ist, welche mehrere um die Achse (a) der Abrichtrolle herum verlaufende Abrichtflächen (2, 3, 4) aufweist, welche im Radialschnitt zahnförmig ausgebildet sind, wobei mindestens drei der Abrichtflächen (2, 3, 4) entlang der Achse (a) der Abrichtrolle ungleichmäßig voneinander beabstandet sind und/oder wobei sich mindestens zwei der Abrichtflächen (2, 3, 4) im Radialschnitt in ihrer Form voneinander unterscheiden.

2. Verfahren nach Anspruch 1, **dadurch gekennzeichnet, dass** mehrere der Abrichtflächen (2, 3, 4), vorzugsweise alle Abrichtflächen (2, 3, 4), beim Abrichten zumindest zeitweilig mit der Schleifschnecke simultan in Eingriff sind.

3. Verfahren nach Anspruch 1 oder 2, **dadurch gekennzeichnet, dass** die zahnförmigen Abrichtflächen (2, 3, 4) an einem Bezugsdurchmesser (d) eine Zahndicke (snl, sn2, sn3) aufweisen, wobei mindestens zwei der Zahndicken (sn1, sn2, sn3) unterschiedlich groß sind.

4. Verfahren nach einem der Ansprüche 1 bis 3, **dadurch gekennzeichnet, dass** die zahnförmigen Abrichtflächen (2, 3, 4) an einem Bezugsdurchmesser (d) eine Teilung (pn1, pn2, pn3) aufweisen, wobei mindestens zwei der Teilungen (pn1, pn2, pn3) unterschiedlich groß sind.

5. Verfahren nach einem der Ansprüche 1 bis 4, **dadurch gekennzeichnet, dass** die zahnförmigen Abrichtflächen (2, 3, 4) eine maximale radiale Höhe (h) aufweisen, wobei mindestens zwei der Höhen (h) unterschiedlich groß sind.

6. Verfahren nach einem der Ansprüche 1 bis 5, **dadurch gekennzeichnet, dass** die zahnförmigen Abrichtflächen (2, 3, 4) einen Flankenwinkel (α) aufweisen, wobei mindestens zwei der Flankenwinkel (α) unterschiedlich groß sind.

7. Verfahren nach einem der Ansprüche 1 bis 6, **dadurch gekennzeichnet, dass** alle Zahndicken (snl, sn2, sn3) unterschiedlich groß sind und/oder dass alle Teilungen (pn1, pn2, pn3) unterschiedlich groß sind und/oder dass alle Höhen (h) unterschiedlich groß sind und/oder dass alle Flankenwinkel (α) unterschiedlich groß sind.

8. Verfahren nach Anspruch 3, **dadurch gekennzeichnet, dass** die Differenz zwischen größter und kleinster Zahndicke (snl, sn2, sn3) mindestens 0,05 mm, vorzugsweise mindestens 0,1 mm und besonders bevorzugt mindestens 0,2 mm, beträgt.

9. Verfahren nach Anspruch 4, **dadurch gekennzeichnet, dass** die Differenz zwischen größter und kleinster Teilung (pn1, pn2, pn3) mindestens 0,05 mm, vorzugsweise mindestens 0,1 mm und besonders bevorzugt mindestens 0,2 mm, beträgt.

10. Verfahren nach einem der Ansprüche 1 bis 9, **dadurch gekennzeichnet, dass** das Verhältnis der Anzahl der Zähne des Zahnrads oder des zahnradförmigen Profils und die Anzahl der Gänge der abzurichtenden Schleifschnecke (1) ganzzahlig ist.

11. Abrichtwerkzeug (1) für das Abrichten einer mehrgängigen Schleifschnecke zum Schleifen einer Verzahnung oder eines zahnradförmigen Profils mit einer inäquidistanten Verzahnung oder Profilierung für die Durchführung des Verfahrens nach einem der Ansprüche 1 bis 10, wobei das Abrichtwerkzeug (1) als mehrrillige Abrichtrolle ausgebildet ist, welche mehrere um die Achse (a) der Abrichtrolle herum verlaufende Abrichtflächen (2, 3, 4) aufweist, welche im Radialschnitt zahnförmig ausgebildet sind, wobei mindestens drei der Abrichtflächen (2, 3, 4), vorzugsweise alle Abrichtflächen (2, 3, 4), entlang der Achse (a) der Abrichtrolle ungleichmäßig voneinander beabstandet sind und/oder wobei sich mindestens zwei der Abrichtflächen (2, 3, 4), vorzugsweise alle Abrichtflächen (2, 3, 4), im Radialschnitt in ihrer Form voneinander unterscheiden.

12. Abrichtwerkzeug nach Anspruch 11, **dadurch gekennzeichnet, dass** die zahnförmigen Abrichtflächen (2, 3, 4) an einem Bezugsdurchmesser (d) eine Zahndicke (sn1, sn2, sn3) aufweisen und wobei mindestens zwei der Zahndicken (snl, sn2, sn3) unterschiedlich groß sind, wobei vorzugsweise die Differenz zwischen größter und kleinster Zahndicke (snl, sn2, sn3) mindestens 0,05 mm, vorzugsweise mindestens 0,1 mm und besonders bevorzugt mindestens 0,2 mm, beträgt.

13. Abrichtwerkzeug nach Anspruch 11 oder 12, **dadurch gekennzeichnet, dass** die zahnförmigen Abrichtflächen (2, 3, 4) an einem Bezugsdurchmesser (d) eine Teilung (pn1, pn2, pn3) aufweisen und wobei mindestens zwei der Teilung (pn1, pn2, pn3) unterschiedlich groß sind, wobei vorzugsweise die Differenz zwischen größter und kleinster Teilung (pn1, pn2, pn3) mindestens 0,05 mm, vorzugsweise mindestens 0,1 mm und besonders bevorzugt mindestens 0,2 mm, beträgt.

14. Abrichtwerkzeug nach einem der Ansprüche 11 bis 13, **dadurch gekennzeichnet, dass** die zahnförmigen Abrichtflächen (2, 3, 4) eine maximale radiale Höhe (h) aufweisen, wobei mindestens zwei der Höhen (h) unterschiedlich groß sind.

15. Abrichtwerkzeug nach einem der Ansprüche 11 bis 14, **dadurch gekennzeichnet, dass** die zahnförmigen Abrichtflächen (2, 3, 4) einen Flankenwinkel (α) aufweisen, wobei mindestens zwei der Flankenwinkel (α) unterschiedlich groß sind.
